Europäisches Patentamt

(19) European Patent Office

Office européen des brevets

(11) Numéro de publication: **0 235 001**
A1

(12) **DEMANDE DE BREVET EUROPEEN**

(21) Numéro de dépôt: **87400198.5**

(22) Date de dépôt: **29.01.87**

(51) Int. Cl.³: **A 22 B 7/00**
**A 22 C 17/00**

(30) Priorité: **12.02.86 FR 8601898**

(43) Date de publication de la demande:
**02.09.87 Bulletin 87/36**

(84) Etats contractants désignés:
**AT BE CH DE ES GB GR IT LI LU NL SE**

(71) Demandeur: SOCIETE DES VIANDES DU COTENTIN,
Société dite:
**Rue de la Petite Vitesse**
**Coutances (Manche)(FR)**

(72) Inventeur: **Belliard, Daniel Gustave Yves**
**469 avenue de Paris**
**Saint Lo (Manche)(FR)**

(74) Mandataire: Herrburger, Pierre
**Cabinet Pierre Herrburger 115, boulevard Haussmann**
**F-75008 Paris(FR)**

(54) **Installation de désossage suspendu de quartiers de devant de bovins.**

(57) a) Installation de désossage suspendu de quartiers de devant de bovins.

b) Installation caractérisée en ce qu'elle se compose d'un poste de préparation (1) qui reçoit le devant entier et comporte des moyens de découpage (7, 9, 10) de ce quartier de devant en sous-ensembles (caparaçon, épaule, collier basses côtes) et des moyens de répartition (11, 12, 13, 14, 16, 19) des sous-ensembles, ainsi que différents postes de désossage (2, 3, 4) pour le désossage de chaque sous-ensemble et des moyens d'évacuation (23) de la viande séparée par désossage et des moyens d'évacuation (24) des déchets séparés par désossage.

EP 0 235 001 A1

Croydon Printing Company Ltd.

1

"Installation de désossage suspendu de quartiers de devant de bovins"

La présente invention concerne une installation de désossage suspendu de quartiers de devant de bovins.

L'invention se propose notamment de créer une installation permettant le désossage des quartiers avant de bovins, tel qu'un quartier avant avec caparaçon, un quartier avant droit cinq côtes, un quartier avant droit dix côtes et un ensemble épaule-collier basses côtes.

Les travaux de désossage dans les abattoirs industriels sont actuellement relativement pénibles à cause des charges très importantes des pièces à désosser, (des poids de l'ordre de 50 à 80 kgs) ainsi que des conditions de température dans lesquelles il est nécessaire d'effectuer le désossage (température ambiante de l'ordre de 2 degrés).

De plus, les conditions de travail sont relativement dangereuses car les morceaux de gras peuvent traîner sur le sol et constituer des surfaces très glissantes ; il en est de même de liquides physiologiques, tels que la synovie, qui étant gras constituent au sol des plaques glissantes et particulièrement dangereuses.

En outre, les conditions d'hygiène doivent être particulièrement strictes et il est établi que la diminution de la pollution et des proliférations bactériennes sont liées à la diminution du temps de contact entre la pièce de viande en cours de désossage et les surfaces qui les supportent.

La présente invention a pour but de créer une installation permettant de désosser en position suspendue, des quartiers de devant de bovins, dans des conditions de sécurité, d'hygiène et d'efficacité particulièrement améliorées par rapport aux conditions actuelles.

A cet effet, l'invention concerne une installation de désossage caractérisée en ce qu'elle se compose d'un poste de préparation qui reçoit le devant entier et comporte des moyens de découpage de ce quartier de devant en sous-ensembles (caparaçon, épaule, collier basses côtes) et des moyens de répartition des sous-ensembles, ainsi que différents postes de désossage pour le désossage de chaque sous-ensemble et des moyens d'évacuation de la viande séparée par désossage et des moyens d'évacuation des déchets séparés par désossage.

Cette décomposition de l'intervention et le partage des opérations entre trois postes de travail qui peuvent en fait être multipliées de façon parallèle c'est-à-dire certains postes analogues ou équivalents pouvant travailler en parallèle, permet d'effectuer le désossage de la pièce en position suspendue, en limitant de façon particulièrement efficace le contact de la pièce de viande et de la surface de support.

Suivant une autre caractéristique de l'invention, le poste de préparation se compose d'un rail alimentant un élévateur débouchant lui-même sur un rail passant au-dessus d'une table de découpage sur laquelle les quartiers de devant sont découpés en sous ensembles.

Suivant une autre caractéristique de l'invention, les moyens de transfert des sous-ensembles vers les postes de désossage sont constitués par des rails munis d'élévateurs au moins certains des rails arrivant dans les postes de désossage par l'arrière et certains arrivant dans les postes par l'avant.

Suivant une autre caractéristique de l'invention, le poste de désossage du caparaçon comporte un rail transversal permettant de faire la liaison entre le rail arrière d'amenée des caparaçons suspendus et un support sur lequel est appliqué le caparaçon à désosser ainsi qu'un moyen de traction et d'application (crochets et vérins) pour appliquer le caparaçon à l'état tendu sur le support et un appui inférieur pour soutenir le caparaçon entre le moment où il est détaché du crochet et le moment où il est fixé aux crochets tendeurs ainsi qu'un dispositif de dénudage des côtes.

Suivant une autre caractéristique de l'invention, le moyen de dénudage des côtes est constitué par un organe de traction relié à un organe constitué par une poignée reliée à un galet destiné à rouler sur les côtes et un câble destiné à passer derrière chaque côte pour la dénuder.

Suivant une autre caractéristique de l'invention, le poste de désossage de l'épaule se compose de trois sous postes, les trois sous-postes étant traversés par le rail d'alimentation avant, et la pièce à désosser restant accrochée à un crochet circulant sur le rail, le premier sous poste comportant une fourchette de dimensions appropriées pour recevoir l'épaule et la maintenir pendant les opérations de désossage du dessus de la palette et du merlan, et le traçage de certains muscles, les deux autres postes servant à effectuer les opérations complémentaires de désossage de l'épaule.

Suivant une autre caractéristique de l'invention, le poste de désossage du collier basses côtes comporte un rail d'alimentation arrivant à l'arrière du poste, un rail transversal faisant communiquer le rail arrière avec l'avant du poste, un moyen de levage situé sensiblement à l'avant du rail transversal pour permettre l'accrochage du collier basses côtes et d'en assurer le maintien à hauteur réglable commandé par le désosseur et évoluant au fur et à mesure du désossage.

Il est à remarquer que le désossage du caparaçon constitue, grâce aux moyens de l'installation de l'invention, une opération particulièrement aisée à réaliser, réduisant de façon considérable les efforts que doit fournir le désosseur.

De plus, cette installation permet au niveau du poste de désossage du caparaçon, un décollement particulièrement efficace des muscles par rapport aux os, ce qui se traduit par un rendement nettement amélioré, tout en facilitant considérablement l'intervention du désosseur et les efforts que celui-ci doit fournir.

Ces efforts sont, en grande partie, diminués du fait que le caparaçon est bien présenté du fait qu'il est maintenu tendu par les vérins. Au niveau du désossage des côtes, l'intervention du désosseur est également particulièrement simple et efficace grâce à son organe de désossage que le désosseur guide en suivant le tracé de chaque côte.

Cet organe de désossage présente une structure particulièrement simple, facile à nettoyer. En cas d'usure du câble ou du fil constituant l'organe de coupe, il est facile de remplacer cette pièce en fixant un nouveau câble ou fil dans les prolongements des pattes des deux branches de l'organe.

Le poste de désossage de l'épaule permet également une intervention particulièrement efficace du désosseur. Celui-ci accède facilement sur le devant et les côtés de la pièce qui reste bien maintenue dans la fourchette. Etant donné que la surface de contact entre la fourchette et la pièce est très réduite, cela réduit, de façon considérable, les risques de pollution ou de prolifération bactérienne. La même remarque s'applique également au poste de désossage du caparaçon puisque, suivant une réalisation avantageuse, la surface de support et l'appui sont constitués par quelques tiges en acier inoxydable.

Le convoyage des pièces, le transfert de celles-ci se font de façon assistée. Les pièces à désosser circulent sur des rails horizontaux où de légères pentes permettent un déplacement par gravité et le passage d'un niveau à l'autre est assuré par un élévateur.

Le désosseur peut à l'entrée de chaque poste prendre la pièce qui lui est destinée et la faire pénétrer dans le poste et y effectuer le désossage.

Le retour des crochets se fait soit en boucle fermée au niveau des postes respectifs, soit en boucle fermée dans l'installation.

Enfin, les conditions avantageuses d'intervention pour le désossage se traduisent également par un rendement en temps d'intervention qui est particulièrement intéressant.

La présente invention sera décrite de façon plus détaillée à l'aide des dessins annexés dans lesquels :

- La figure 1 est un schéma de l'ensemble de l'installation pour le désossage suspendu de la partie avant d'un boeuf,

- La figure 2 est une vue schématique du poste de désossage du caparaçon,

- La figure 3 est un schéma de l'outil servant à dégager les côtes du caparaçon,

- La figure 4 est un schéma du poste de désossage de l'épaule.

- La figure 5 est un schéma en vue arrière du poste de désossage du collier basses côtes.

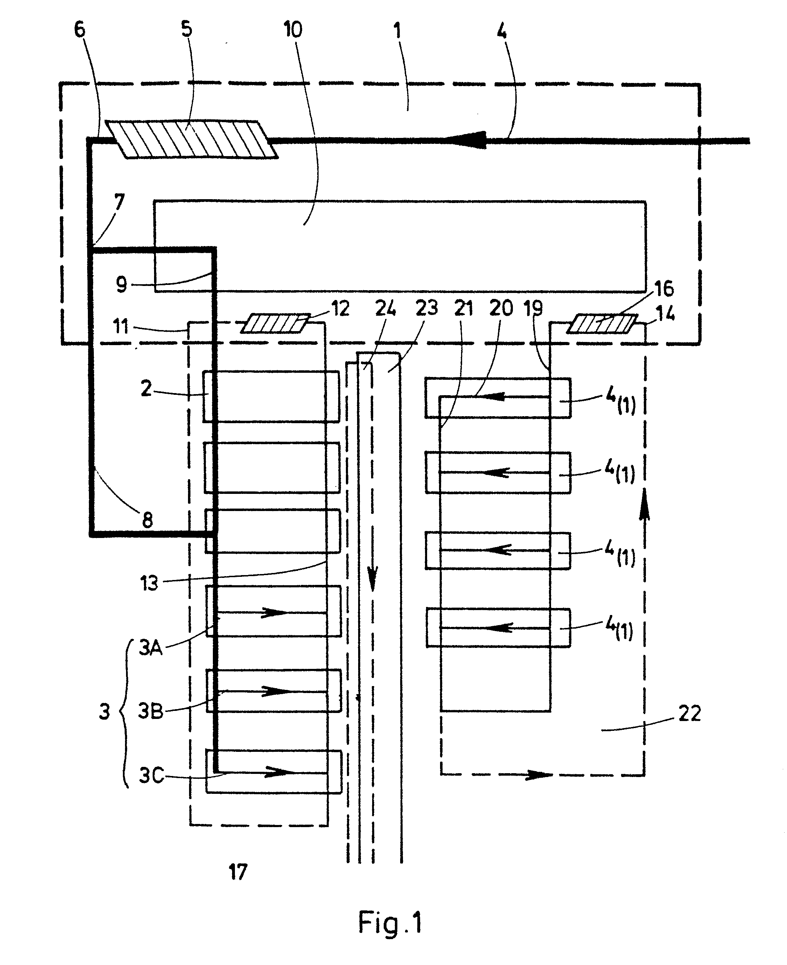

Selon la figure 1, l'installation pour le désossage suspendu d'un quartier de devant d'un boeuf (quartier qui comporte encore le caparaçon ou quartier coupé à cinq côtes droit ou encore ensemble épaule-collier basses côtes) se compose d'un poste de préparation 1 pour séparer le quartier de devant en sous-ensembles, des postes de désossage de caparaçons 3, des postes de désossage d'épaule 2 et des postes de désossage de colliers basses côtes 4.

Le poste de préparation 1 est alimenté à partir de la chambre froide non représentée, en quartiers de devant par un rail 4 venant de la chambre froide. Ce rail est horizontal, à la hauteur des rails de la chambre froide. Comme les postes en aval doivent traiter les pièces à des hauteurs différentes, le poste de préparation comporte un ascenseur 5 par exemple un ascenseur à vis qui prend les crochets roulants accrochés au rail 4 pour les transférer jusqu'au rail haut 6 à l'aide d'un ascenseur 5. Le rail 6 comporte un aiguillage 7 qui permet de diriger les pièces soit sur le rail 8, soit sur le rail 9. Ce dernier passe au-dessus d'une table 10. Lorsqu'une pièce arrive au-dessus de la table 10, le préparateur sépare les sous-ensembles du quartier, c'est-à-dire qu'avec un coup de couteau, il sépare l'épaule et le collier basses côtes de façon que ces deux pièces tombent sur la table 10. Le caparaçon reste accroché pour continuer son chemin vers l'un des postes de désossage 3 en suivant le rail 8 et 8a pour arriver au rail 13.

Au niveau du poste de préparation 1, l'épaule est travaillée sur sa face extérieure. Un trait de couteau est donné de chaque côté de l'épine du scapulum (fosse sus et sous-épineuse). En pratique, on réalise une ganse sur le jarret au niveau de la crosse pour accrocher l'épaule à un crochet circulant sur le rail 11. Ce rail 11 alimente le rail 13 par l'intermédiaire d'un ascenseur 12 puisque dans les postes 2 et 3, la hauteur de travail est différente de celle du poste préparatoire 1.

Le collier basses côtes est également travaillé sur la table 10 :

Un trait de scie est donné sur les apophyses épineuses qui sont enlevées au couteau sur la table.

Le filet mignon est entièrement dégagé ainsi que la chaînette ; les apophyses sur le collier sont tracées. L'atlas est enlevé et la cinquième vertèbre dorsale est dégagée. Les manches sont dégagées. Puis le collier est accroché par l'intermédiaire de sa cinquième vertèbre à un crochet auto-serrant porté par un chariot se déplaçant sur le rail 14. Ce rail 14 alimente un élévateur 16 qui transfère au rail 19 arrivant à l'arrière, des postes de désossage 4A du collier.

Selon l'invention, le rail 8 qui alimente les postes de désossage de caparaçon 3, arrive à l'arrière de chaque poste 3, perpendiculairement aux rails 8 et 9. Il y a dans chaque poste un segment de rail 17 qui permet au-dessus des postes 3A, 3B, 3C de transférer le caparaçon vers l'avant du poste pour le désosser. Après le désossage, comme cela sera décrit ultérieurement, le crochet passe sur le rail 13 à l'avant du poste pour être récupéré. Ce rail 13 arrivant de l'élévateur 12 sert également à l'alimentation en épaules à désosser vers les postes 2 de désossage correspondants.

Les crochets roulants sont, par exemple, remis en circulation par le rail de retour 18 qui arrive soit sur le rail 11 en amont de l'élévateur 12, soit vers un autre rail de récupération circulant dans l'abattoir et qui revient à l'entrée de l'abattoir.

Pour le désossage des colliers basses côtes dans les postes de désossage 4, l'installation comporte en aval de l'ascenseur 16 un rail 19 qui arrive à l'arrière de chaque poste de désossage 4. Perpendiculaire à ce rail 19, chaque poste 4A comporte un rail 20 permettant d'amener le collier basse côte à l'avant du poste.

A cet endroit, tous les postes de désossage sont traversés par un rail avant 21 qui conduit au rail 22 de récupération des crochets. Le rail 22 arrive sur le rail 14 dans le poste de préparation 10.

L'installation comporte également un convoyeur 23 pour l'évacuation de la viande obtenue par désossage et un convoyeur à déchets 24 sur lequel on évacue les os et les morceaux de viande non utilisables.

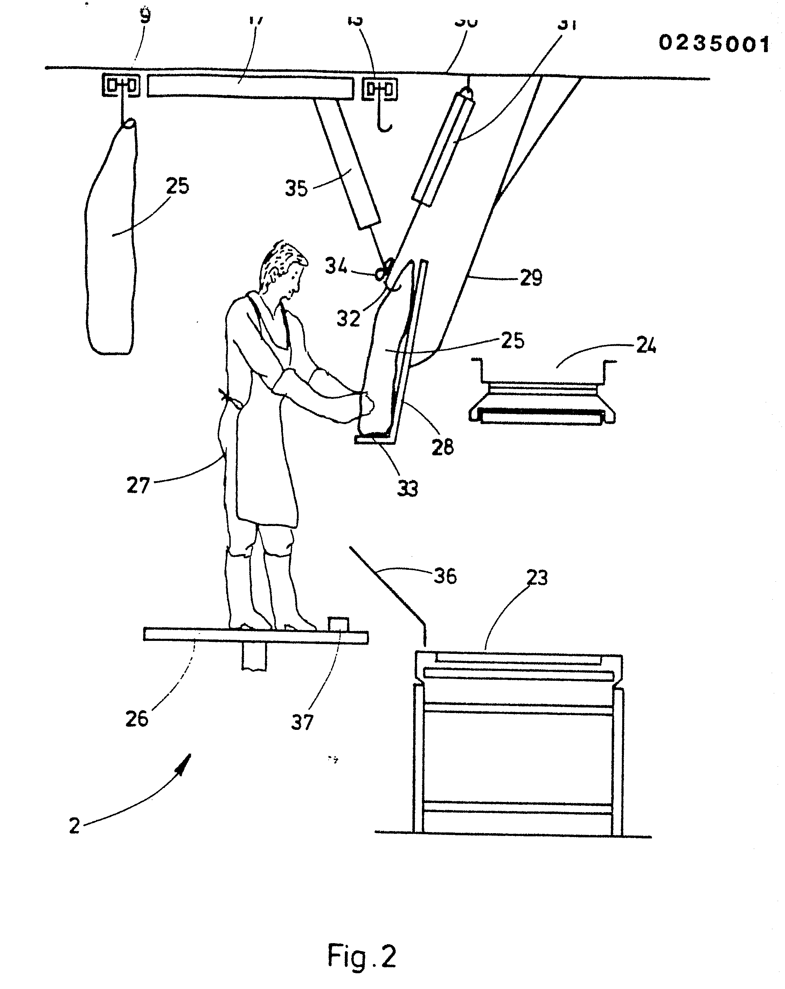

La figure 2 montre schématiquement un poste de désossage 2 du caparaçon 25. Ce poste se compose d'une plateforme 26 sur laquelle se tient le désosseur 27. Cette plateforme est à une hauteur appropriée en fonction de la hauteur des différents postes.

Ce poste 2 comporte également un dispositif de maintien 28 du caparaçon, relié par une structure 29 par exemple à l'ossature 30 du bâtiment, ossature qui porte les rails 9 et 13. Au-dessus de l'organe d'appui 28, il est prévu un vérin 31 à crochet 32 servant à plaquer le caparaçon 25 contre le support 28 et à le soulever progressivement.

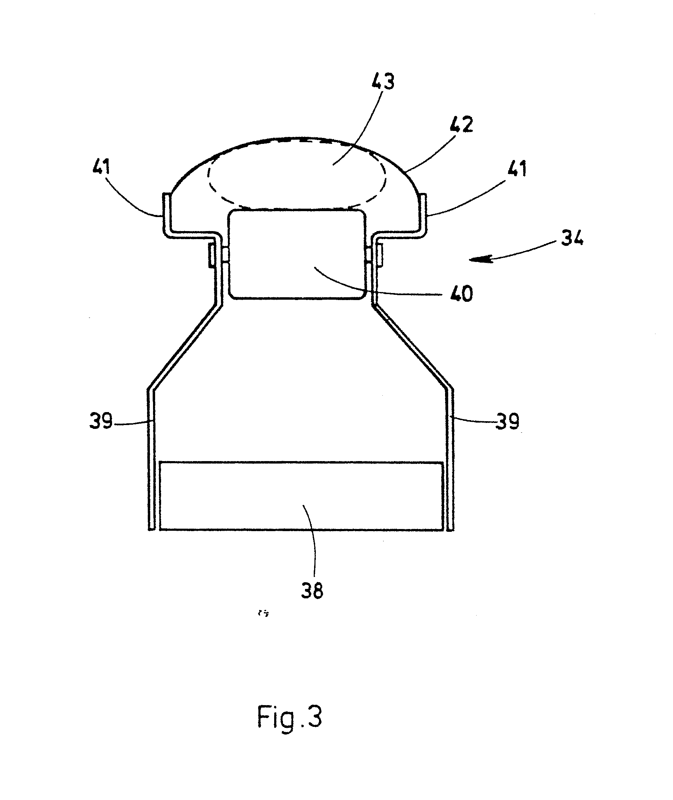

Le support 28 se termine à sa partie inférieure par un appui 33. Devant le support 28, est prévu un organe 34 de dénudage des côtes, porté par l'extrémité de la tige d'un vérin 35. Cet organe 34 est représenté de façon détaillée à la figure 3.

De l'autre côté du poste se trouve le convoyeur 24 pour l'évacuation des os. En dessous du support 28 se trouve un déflecteur 36 sur lequel le désosseur fait tomber la viande détachée des os ; ce déflecteur arrive sur le convoyeur à viande 23.

Les différents organes de traction et de levage, tels que les vérins 31, 35, sont commandés par une commande à pied 37 fixée ou posée sur la plateforme 26. Le désosseur 27 commande ces commandes par une action du pied.

Selon la figure 3, l'organe de dénudage 34 des côtes se compose d'une poignée 38 reliée par deux branches 39 à un galet 40. Les extrémités avant 41 des branches 39 portent un câble 42 par exemple en acier ou en une matière synthétique très résistante pour dégager l'arrière de la côte 43 (en pointillés et en coupe), le galet 40 roulant et s'appuyant sur l'avant de la côte 43.

L'organe 34 est relié à la tige du vérin 35, comme représenté à la figure 2.

.../...

Le poste de désossage 2 du caparaçon représenté aux figures 2 et 3, fonctionne comme suit :

Le caparaçon 25 arrive accroché à un crochet circulant sur le rail 9 venant du poste de désossage 2 par l'arrière. Par l'intermédiaire du rail transversal 17, relié au rail arrière 9, le désosseur 27 fait venir le caparaçon 25 sur le rail avant 13. Le désosseur coupe la partie retenue par le crochet pour faire tomber la pièce 25 sur le support 28 et l'appui 33. Dans cette position, le sternum est horizontal et repose sur l'appui 33. il est à remarquer que, lors de la préparation du quartier de devant, il a déjà été donné un trait de scie sur les côtes à la jonction de celles-ci avec les cartilages du sternum ainsi qu'un coupe de couteau le long des vertèbres pour décoller le gras du gros bout de la poitrine (muscle pectoral).

Pour plaquer la pièce 25 contre le support 28, le désosseur accroche, en partie haute de cette pièce 25, le crochet 32. Il est en général préférable d'avoir deux crochets 32 puisque le caparaçon est une pièce ayant une surface relativement grande ; cela permet de plaquer cette pièce plus régulièrement contre le support et d'augmenter la stabilité.

Suivant un mode de réalisation, le support 28 et l'appui 33 sont constitués par des plaques ou de préférence par des tubes en acier inox.

Lorsque le désosseur a mis la pièce 25 sur le support et l'appui 28, 33, il donne un trait de couteau de chaque côté des côtes en partant du trait de scie et en descendant vers le sternum. La tête de la côte ainsi dégagée permet d'y passer l'organe de dénudage 34, c'est-à-dire de faire passer le câble derrière la côte 43, comme cela est représenté à la figure 3. En agissant sur la commande 37, le désosseur fait descendre l'organe 34 le long de la côte, le galet 40 roulant sur la face avant de la côte.

Il est intéressant que le vérin 35 soit relié à l'ossature 30 ou toute autre partie fixe de l'installation par une liaison articulée lui permettant de pivoter d'avant en arrière et de gauche à droite de façon à pouvoir suivre dans l'axe la courbure de la côte avec l'organe 34. Il est intéressant de rappeler que le vérin 31 est monté sur roulettes sur l'ossature 30 permettant le déplacement du vérin parallèlement au rail 13. Lorsque les côtes sont décollées, elles sont enlevées avec les cartilages costaux. Le désosseur enlève également le sternum. Ces os et cartilages sont évacués par le convoyeur à déchets 24. La viande est décrochée pour glisser sur le déflecteur 36 et arriver sur le convoyeur à viande 23.

Le poste de désossage de l'épaule 2 se compose en fait de trois postes 2A, 2B, 2C, un seul poste complet étant représenté à la figure 1.

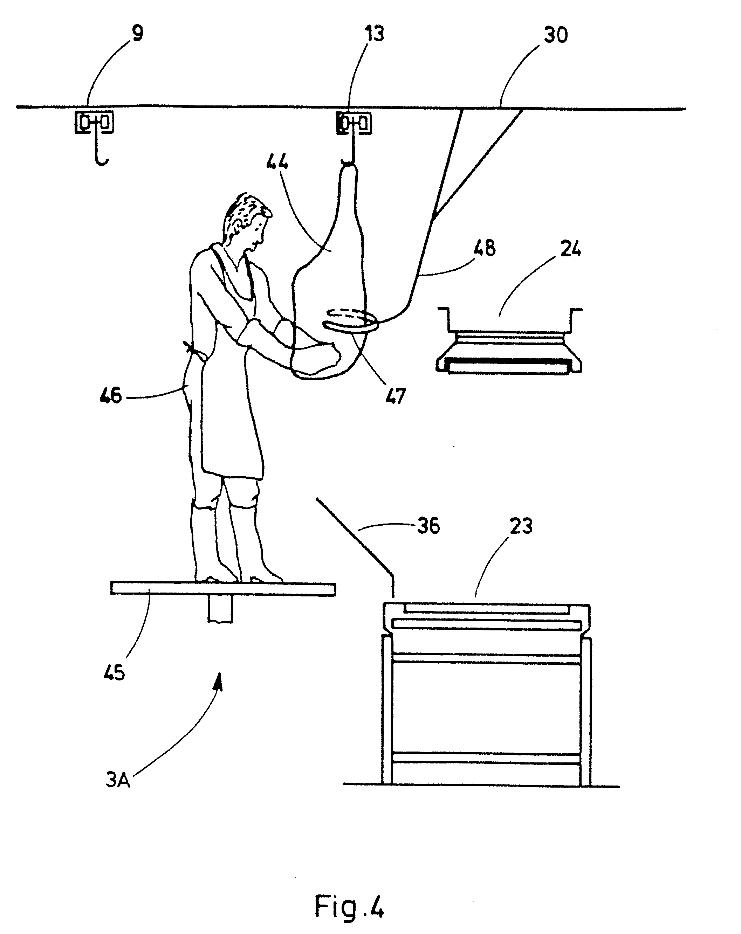

La figure 4 montre le sous poste 2A.

Selon la figure 4, le sous-poste 2A est alimenté en pièces (épaules 44) par le rail 13 passant à l'avant du poste. Le poste comporte une plateforme 45 sur laquelle se tient le désosseur 46. A l'avant du poste, il est prévu une fourchette à deux bras portée par un support 48 relié par exemple à la charpente 30. Les deux bras de la fourchette 47 constituant un organe de maintien, sont écartés l'un de l'autre d'une distance égale sensiblement à la largeur moyenne d'une épaule 44. L'épaule est prise sensiblement à la moitié de la hauteur de la palette ; le creux de la fourchette 47 est sensiblement égal à la moitié de la largeur de la palette.

Dans ce poste, le désosseur 46 lève le dessus de la palette et le merlan qu'il laisse glisser vers le bas ; ces pièces tombent sur le déflecteur 36 et arrivent sur le convoyeur à viande 23. Dans ce sous-poste ou dans le sous-poste suivant, le désosseur dégage la tête du jumeau de ses attaches avec l'humérus et le scapulum ; par pression de haut en bas, il décolle complètement la tête et fait tomber le jumeau sur le convoyeur 23.

Ensuite, il trace l'omoplate du côté de la boule de macreuse ; il coupe les attaches de la tête de l'omoplate avec le dessus du paleron et d'une pression de haut en bas, le désosseur décolle l'omoplate et la met sur le convoyeur de déchets 24.

Puis la pièce ainsi travaillée quitte le poste 2A pour passer dans le sous-poste 2B. Ce poste se distingue du précédent par une hauteur différente de la plateforme (environ 40 cm). Dans le sous-poste 2B, le désosseur lève la boule de macreuse qu'il fait tomber sur le convoyeur 23. Il trace également le jarret sur ses deux faces en prenant bien soin de dégager complètement l'olécrane sur ses deux faces ; puis il trace la boîte à moëlle sur les deux faces de l'humérus en allant jusqu'aux "Bossettes" latérales. Après ce travail, la pièce passe dans le sous-poste 2C. Dans le sous-poste 2C, le désosseur introduit la partie supérieure de la pièce dans une pince de façon à serrer solidement la partie supérieure de l'os. Il peut alors couper le tendon et faisant pression sur la viande de haut en bas, il la fait tomber sur le déflecteur 36 et le convoyeur 23. La viande une fois détachée, il ouvre la pince et en enlève l'os pour l'évacuer par le convoyeur 24.

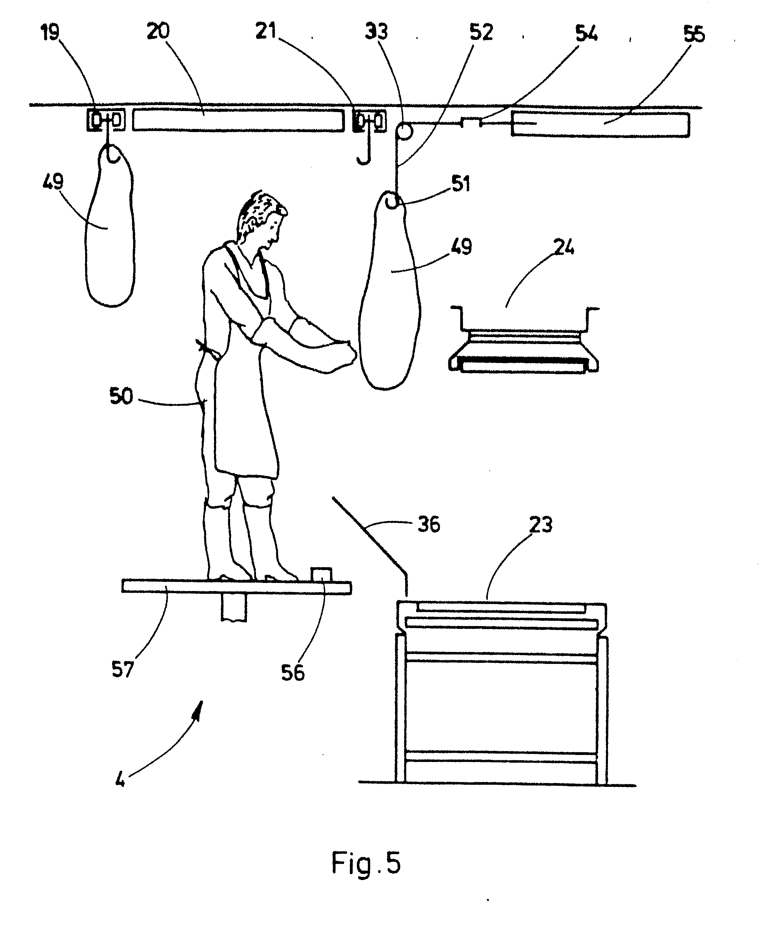

Le poste de désossage du collier basses côtes 4, situé selon la figure 1 de l'autre côté des convoyeurs 23, 24 et qui est représenté en vue arrière à la figure 5, reçoit le collier basses côtes 49 transporté par le rail 19. Le désosseur 50 fait passer le collier 49 le long du rail transversal 20 jusqu'au niveau du rail 21. A cet endroit, le désosseur décroche le collier 49 du crochet du rail et l'accroche à une pince 51 reliée par exemple par un câble 52 et une poulie de renvoi 53 à un crochet 54 relié à la tige d'un vérin 55. Ce vérin se commande à l'aide d'une commande à pied 56 se trouvant sur la plateforme 57 sur laquelle se tient le désosseur 50.

Le désosseur peut alors effectuer les opérations de désossage et relever progressivement la pièce 49 de façon à travailler dans une position confortable. La viande détachée de l'os tombe sur le déflecteur 36 et le convoyeur 23. Puis il détache l'os de la pince 51 et l'évacue par le convoyeur 24. La pince 51 est renvoyée au poste d'accrochage au niveau bas de l'élévateur réservé au collier basses côtes. Il est à remarquer que la plateforme et le rail ne sont pas aux mêmes hauteurs par rapport au sol que les plateformes et rails des postes de désossage des caparaçons et des épaules de l'autre côté des convoyeurs 23, 24.

Finalement, il est à remarquer que l'installation peut également s'appliquer à la découpe en demi-gros d'une pièce composée de l'épaule, du collier basses côtes et du gros bout de poitrine ayant pour base osseuse les sept sternèbres du sternum, cette pièce est accrochée par le jarret. On fait tomber sur la table 10 du poste de préparation le gros bout de poitrine et le collier basses côtes. L'épaule reste dans ce cas accrochée et on utilise l'élévateur 5 servant usuellement au caparaçon dans le cas du quartier de devant avec caparaçon. Une commande pneumatique actionne un aiguillage qui dévie cette pièce vers le poste de désossage d'épaule. Le gros bout de la poitrine qui a reçu un trait de scie à la jonction des côtes et du cartilage du sternum et dont le pectoral a été détaché du sternum par un coup de couteau, est accroché et passe par l'élévateur servant aux épaules 12 dans le cas du quartier de devant avec caparaçon ; au lieu de passer devant les désosseurs d'épaules (rail 13), il passe derrière ceux-ci pour arriver à l'arrière des désosseurs de caparaçon par le rail 9 ; ensuite, les opérations de désossage sont analogues à celles du caparaçon.

Pour le collier basses côtes, les conditions sont les mêmes que dans le cas du quartier de devant avec caparaçon.

L'invention s'applique également au désossage d'une pièce comprenant une épaule et le collier basses côtes. Cette pièce est accrochée par le jarret ; on détache le collier basses côtes qui tombe sur la table 10 dans le poste de préparation. L'épaule monte par l'élévateur servant au caparaçon dans le cas du quartier de devant du caparaçon. Les opérations sont ensuite les mêmes que dans le cas du quartier de devant coupé droit à cinq côtes. Toutefois, dans ce cas, il n'y a pas de gros bout de poitrine à raccrocher ou à désosser.

## REVENDICATIONS

1°) Installation de désossage suspendu de quartiers de devant de bovins, installation desservie par un système de convoyage à rails et à crochets roulants, qui se compose d'un poste de préparation (1) qui reçoit le devant entier et comporte des moyens de découpage (7, 9, 10) de ce quartier de devant en sous-ensembles (caparaçon, épaule, collier basses côtes) et des moyens de répartition (11, 12, 13, 14, 16, 19) des sous-ensembles, caractérisée par différents postes de désossage vertical (2, 3, 4) pour le désossage de chaque sous-ensemble et des moyens d'évacuation (23) de la viande séparée par désossage et des moyens d'évacuation (24) des déchets séparés par désossage, le poste de préparation (1) se composant d'un rail (4) alimentant un élévateur (5) débouchant lui-même sur un rail (6, 7, 8, 9) passant au-dessus d'une table de découpage (10) sur laquelle au moins certains quartiers de devant sont découpés en sous-ensembles (25, 44, 49), les moyens de transfert des sous-ensembles (25, 44, 49) vers les postes de désossage (2, 3, 4) étant constitués par des rails (9, 13, 19) munis d'élévateurs (12, 16), au moins certains (9, 19) des rails arrivant dans les postes de désossage (3, $4_1$) par l'arrière et certains (13) arrivant dans les postes (2) par l'avant.

2°) Installation selon la revendication 1, caractérisée en ce que le poste de désossage vertical (3) du caparaçon (25) comporte un rail transversal (17) permettant de faire la liaison entre le rail arrière (9) d'amenée des caparaçons (25) suspendus et un support (28) sur lequel est appliqué le caparaçon (25) à désosser ainsi qu'un moyen de traction et d'application (32, 31) (crochets et vérins) pour appliquer le caparaçon (25) à l'état tendu sur le support (28) et un appui inférieur (33) pour soutenir le caparaçon (25) entre le moment où il est détaché du crochet et le moment où il est fixé aux crochets tendeurs (32) ainsi qu'un dispositif de dénudage des côtes (34, 35).

3°) Installation selon la revendication 2, caractérisée en ce que le moyen de dénudage des côtes (34, 35) est constitué par un organe de traction (35) relié à un organe constitué par une poignée (38) reliée à un galet (40) destiné à rouler sur les côtés (43) et un câble (42) destiné à passer derrière chaque côté (43) pour la dénuder.

4°) Installation selon la revendication 1, caractérisée en ce que le poste de désossage de l'épaule (2) se compose de trois sous-postes (2A, 2B, 2C) les trois sous-postes étant traversés par le rail d'alimentation (13) avant, et la pièce (44) à désosser restant accrochée à un crochet circulant sur le rail (13), le premier sous-poste (2A) comportant une fourchette (47) de dimensions appropriées pour recevoir l'épaule et la maintenir pendant les opérations de désossage du dessus de la palette et du merlan, et le traçage de certains muscles, les deux autres postes (2B, 2C) servant à effectuer les opérations complémentaires de désossage de l'épaule.

5°) Installation selon la revendication 1, caractérisée en ce que le poste de désossage du collier basses côtes (4) comporte un rail d'alimentation (19) arrivant à l'arrière du poste (4), un rail transversal (20) faisant communiquer le rail arrière (19) avec l'avant du poste (4), un moyen de levage (51, 52, 53, 54, 55) situé sensiblement à l'avant du rail transversal (20) pour permettre l'accrochage du collier basses côtés (49) et d'en assurer le maintien à hauteur réglable (55, 56) commandé par le désosseur (50) et évoluant au fur et à mesure du désossage.

ORIGINAL

Cabinet
Pierre HERRBURGER

Fig.1

Fig.2

Fig.3

Fig.4

Fig.5

Office européen
des brevets

**RAPPORT DE RECHERCHE EUROPEENNE**

**0235001**
Numéro de la demande

EP  87 40 0198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 593 369  (ANDERSON)<br>* Abrégé; page 1; figures  1-4,13 * | 1 | A 22 B    7/00<br>A 22 C   17/00 |
| | --- | | |
| A | US-A-1 416 443  (BROWN)<br>*    Page    1,    lignes    8-84;<br>revendications 1,2; figure 1 * | 1 | |
| | --- | | |
| A | CH-A-  592 417  (NILL)<br>* En entier * | 2,3 | |
| | --- | | |
| A | DE-A-3 011 026  (SCHWEISFURTH)<br>*   Revendications   1-16;   page<br>11,12; figure 1 * | 1,2,4 | |
| | --- | | DOMAINES TECHNIQUES RECHERCHES (Int. Cl.4) |
| A | DE-C-  605 558  (ALLGEMEINE TRANSPORT ANLAGEN GmbH) | | A 22 B<br>A 22 C |
| | --- | | |
| A | FR-A-2 024 925  (MARTI) | | |
| | --- | | |
| A | FR-A-2 513 080  (AUBERT) | | |
| | --- | | |
| A | DE-C-  512 105  (FRESE) | | |
| | ----- | | |

Le présent rapport de recherche a été établi pour toutes les revendications

| Lieu de la recherche | Date d'achèvement de la recherche | Examinateur |
|---|---|---|
| LA HAYE | 06-05-1987 | VON ARX V.U. |